Europäisches Patentamt

European Patent Office

Office européen des brevets

(19)

(11) Veröffentlichungsnummer : **0 475 984 B1**

(12) **EUROPÄISCHE PATENTSCHRIFT**

(45) Veröffentlichungstag der Patentschrift :
09.11.94 Patentblatt 94/45

(51) Int. Cl.$^5$ : **H04L 25/03**

(21) Anmeldenummer : 90908516.9

(22) Anmeldetag : 01.06.90

(86) Internationale Anmeldenummer :
PCT/EP90/00873

(87) Internationale Veröffentlichungsnummer :
WO 90/15495 13.12.90 Gazette 90/28

(54) **VERFAHREN ZUR SIGNALENTZERRUNG UNTER ANWENDUNG VON TEST-SEQUENZEN.**

(30) Priorität : 06.06.89 DE 3918340

(43) Veröffentlichungstag der Anmeldung :
25.03.92 Patentblatt 92/13

(45) Bekanntmachung des Hinweises auf die
Patenterteilung :
09.11.94 Patentblatt 94/45

(84) Benannte Vertragsstaaten :
AT BE CH DE DK ES FR GB IT LI LU NL SE

(56) Entgegenhaltungen :
DE-A- 3 246 525
DE-A- 3 540 716
US-A- 4 441 192

(73) Patentinhaber : DEUTSCHE
THOMSON-BRANDT GMBH
Hermann-Schwer-Strasse 3
D-78048 Villingen-Schwenningen (DE)

(72) Erfinder : KLANK, Otto
Allensteiner Str. 12
D-3160 Lehrte-Arpke (DE)
Erfinder : LAABS, Jürgen
Zehlendorfer Str. 60
D-3017 Pattensen (DE)

(74) Vertreter : Einsel, Robert, Dipl.-Ing.
Deutsche Thomson-Brandt GmbH
Patent- und Lizenzabteilung
Göttinger Chaussee 76
D-30453 Hannover (DE)

## Beschreibung

Die Erfindung betrifft ein Verfahren zur Signalentzerrung in einem Empfänger für über einen Übertragungskanal übertragene digital codierte Signale bei Mehrwegeempfang nach dem Oberbegriff des Anspruchs 1.

Bei drahtloser Signalübertragung im höheren Frequenzbereich gelangt das Signal mitunter auf verschiedenen Wegen zum Empfänger. Neben einem direkten Weg können Reflektionen an Gebäuden oder natürlichen Erhebungen das vom Sender ausgestrahlte Signal auf Umwegen zum Empfänger leiten. Da sich die einzelnen Wege durch ihre Länge sowie ihre Dämpfung unterscheiden, erhält der Empfänger mehrere Signale, die alle die ursprüngliche Information enthalten, sich jedoch durch Amplitude, Laufzeit sowie Phasenwinkel voneinander unterscheiden können. Die Überlagerung dieser Signale ergibt ein zusammengesetztes Signal, bei dem die ursprüngliche Information mehr oder weniger verzerrt ist. Dies kann besonders bei digitalen Signalen zu erheblichen Störungen führen.

Aus DE-A-3 540 716, DE-A-3 246 525 und US-A-4 441 192 ist bereits ein Verfahren zur Signalentzerrung in einem Empfänger für übertragene digital codierte Signale bei Mehrwegeempfang nach dem Oberbegriff des Anspruchs 1 bekannt.

Der Erfindung liegt die Aufgabe zugrunde, ein Verfahren zur Signalentzerrung zu schaffen, welche die durch Mehrwegeempfang verursachten Störungen soweit beseitigt, daß wieder das ursprüngliche Signal lesbar ist.

Diese Aufgabe wird bei einem Verfahren nach dem Oberbegriff des Anspruchs 1 durch die im kennzeichnenden Teil angegebenen Merkmale gelöst.

Bei dem erfindungsgemäßen Verfahren werden die Übertragungseigenschaften des Übertragungskanals, wie er am Empfangsort aus den einzelnen Übertragungwegen zusammengesetzt ist, ermittelt. Die Ermittlung dieser Eigenschaften wird in kurzen Zeitabständen wiederholt, damit zwischenzeitlich eingetretene Änderungen, die insbesondere bei beweglichen Empfängern auftreten, berücksichtigt werden können.

Zu diesem Zweck werden Test-Sequenzen vereinbarter Struktur ausgestrahlt, die durch Mehrwegeempfang natürlich den gleichen Verzerrungen unterliegen, wie die Nutzdaten, im Gegensatz zu diesen im Aufbau aber von vorn herein bekannt sind und somit Rückschlüsse auf die im Übertragungskanal stattgefundenen Verzerrungen zulassen. Im einzelnen wird eine Korrelation zwischen der auch im Empfänger gespeicherten Test-Sequenz und der durch Überlagerung verzerrten empfangenen Test-Sequenz durchgeführt.

Das Ergebnis, die Kanalstoßantwort, stellt ein Korrelatiosspektrum dar, in dem die einzelnen Spektralkomponenten die Wege repräsentieren, auf denen das ursprüngliche Signal vom Sender zum Empfänger gelangt ist. Dieses Spektrum kann dann dazu benutzt werden, eine Filteranordnung zu steuern, die die Übertragungsfunktion des Übertragungskanals weitgehend invers nachbildet. Wenn das überlagerte Signal dann diese Filteranordnung durchlaufen hat, werden die auf dem Übertragungswege eingetretenen Verzerrungen wieder rückgängig gemacht. Die Einstellung dieser Filteranordnung wird nach jeder Test-Sequenz vorgenommen und bleibt für die Nutzdaten dann bis zur nächsten Test-Sequenz erhalten, da man davon ausgehen kann, daß die ermittelten Übertragungseigenschaften des Übertragungskanals für eine gewisse Zeit konstant bleiben.

Weiterbildungen und vorteilhafte Ausgestaltungen des erfindungsgemäßen Verfahrens ergeben sich aus den Ansprüchen, der weiteren Beschreibung und der Zeichnung, die ein Ausführungsbeispiel veranschaulicht.

In der Zeichnung zeigen:

Fig. 1    ein Mehrwegeübertragungsmodell mit Entzerrung auf der Empfangsseite,

Fig. 2    den Aufbau eines Daten-Rahmens, in dem Nutzdaten und Test-Sequenzen übertragen werden,

Fig. 3    einen Ausschnitt aus einem Datenstrom zur Darstellung der zyklischen Korrelation,

Fig. 4    ein zyklisches Korrelationsspektrum,

Fig. 5    Summenfolgen und eine daraus gewonnene Summenfolgenfunktion,

Fig. 6    eine mögliche Filteranordnung zur inversen Nachbildung der Übertragungsfunktion des Übertragungskanals.

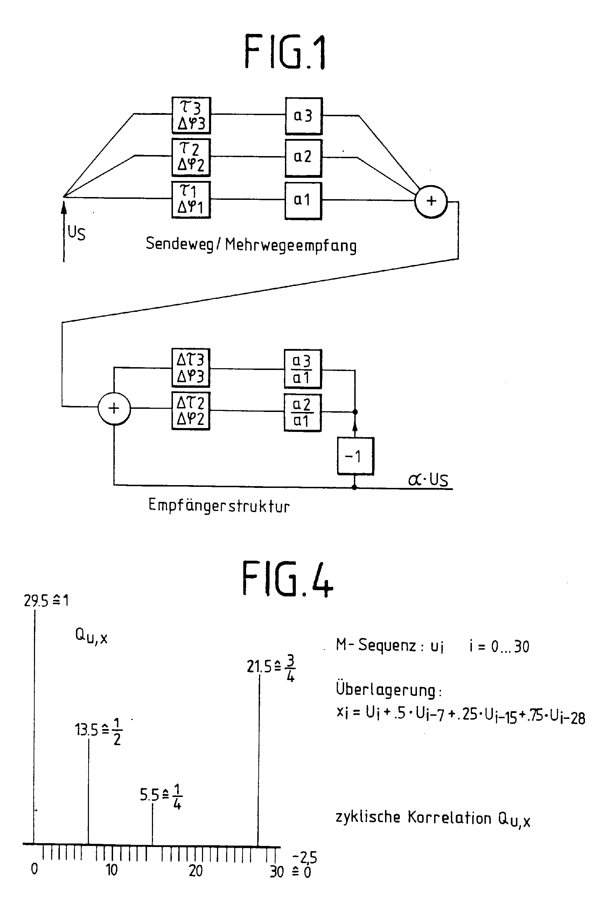

In Fig. 1 gelangt das Sendesignal $U_S$ zu einem Übertragungskanal, der seinerseits drei Übertragungswege umfaßt. Diese Übertragungswege unterscheiden sich durch die Amplitude a, die Laufzeit $\tau$ und den Phasenwinkel $\varphi$. Die Indizes stehen für die Ordnungszahlen der Übertragungskanäle. Am Empfangsort findet eine lineare Überlagerung dieser drei Übertragungswege statt.

Im Empfänger werden dann die Verzerrungen dadurch beseitigt, daß zwei Rückführungen vorgesehen sind, die die inversen Übertragungfunktionen zweier der drei Übertragungswege besitzen. Indem das empfangene Mehrwegesignal mit umgekehrtem Vorzeichen diesen inversen Übertragungswegen zugeführt und mit sich selbst addiert wird ergibt sich ein Signal $U_S$, welches nur über den einen, mit Index 1 bezeichneten Weg zum Empfänger gelangt ist.

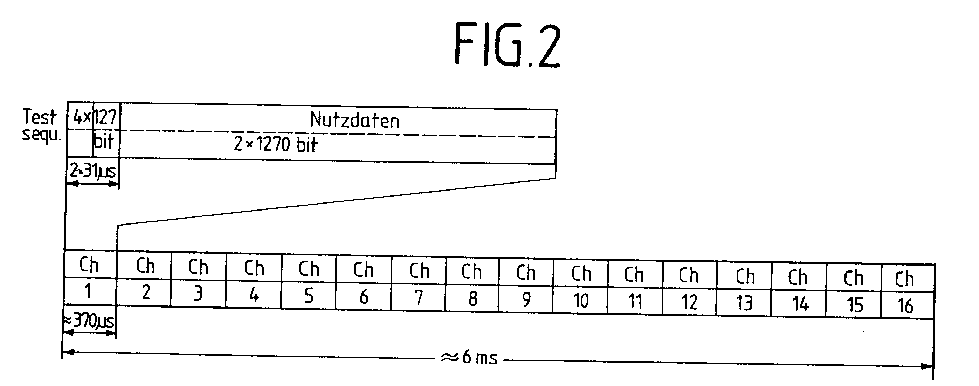

Um nun die Übertragungseigenschaften des Kanals zu ermitteln, werden Test-Sequenzen vor der eigentlichen Übertragung von Nutzdaten ausgesendet. Eine Rahmenstruktur dieses Datenformats zeigt Fig. 2. Hierbei ist im unteren Teil der Zeichnung ein Hauptrahmen dargestellt, welcher z.B. 16 Datenkanäle umfaßt. Der erste Datenkanal ist im oberen Teil der Zeichnung noch einmal gesondert zeitlich gedehnt herausgezeichnet. Wie die Vergrößerung erkennen läßt, wird zunächst eine Test-Sequenz gesendet, der sich dann die Nutzdaten anschließen. Als Test-Sequenz sind erfindungsgemäß zwei aufeinanderfolgende M-Sequenzen geeignet, da diese hervorragende Auto- und Kreuzkorrelationseigenschaften aufweisen.

M-Sequenzen sind binäre Sequenzen einer mit einem Polynom der Ordnungszahl n maximal erreichbaren Länge $2^n - 1$. Solche Polynome des Ausdrucks

$h(x) = h_n \cdot x^n + ... + h_1 \cdot x + h_0$ lassen sich durch rückgekoppelte Schieberegister realisieren. Dabei können $h_n$, $h_0$ = 1 und die übrigen $h_i$ = 0 oder 1 sein. Der Grad n des Polynoms gibt auch die Anzahl der Register des Schieberegisters an. Die Registerausgänge, die durch $h_i$ = 1 repräsentiert werden, müssen gemeinsam mit dem Ausgang $h_0$ mittels EXOR-Gatter verknüpft und mit dem Eingang $H_n$ verbunden werden. Vor dem Ablauf des Schieberegisters sind die Register zu setzen, auf keinen Fall dürfen sämtliche Register auf Null liegen.

Wenn der Ausdruck $u = (u_o, u_1, ... u_{N-1})$ eine M-Sequenz darstellt, so ist $T^i u$ die um i-Takte zyklisch verzögerte Sequenz u:

$$T^i u = (u_i, u_{i+1}, ... u_{n-1}, u_0, ... u_{i-1})$$

M-Sequenzen haben im allgemeinen folgende Eigenschaften:

a. Die Periode von u ist $N = 2^n - 1$.

b. Es gibt N unterschiedliche Phasen der Sequenz u: $u, Tu, T^2 u, ... T^{N-1} u$.

c. Die EXOR-Verknüpfung ergibt:

$T^i u \oplus T^j u = T^k u$ für $i \neq j \neq k$        $0 <= i, j, k < N$

d. u[q] wird aus der M-Sequenz u gebildet, indem aus u jedes $q_{te}$ Bit für eine neue Sequenz v benutzt wird ($v_i = u_{q \cdot i \bmod N}$). u[q] hat die Periode N/gcd(N,q), d.h. u[q] ergibt nur dann eine M-Sequenz, wenn q ungerade ist und gcd(N,q) = 1 wird (gcd(N,q) stellt den größten gemeinsamen Teiler von N und q dar).

Z.B. n = 6, N = 63, q = 3 -> gcd(63,3)=3, periode = 63/3 = 21,

u[3] ist keine M-Sequenz. u[5] mit N/gcd(N,q)=63 führt zu einer M-Sequenz.

e. Das reziproke Polynom einer M-Sequenz ergibt eben falls eine M-Sequenz.

$$h'(x) = x^n \cdot h(x^{-1}) = h_o \cdot x^n + ... h_{n-1} \cdot x + h_n$$

$$u = h(x) \text{ wird } u[q] = h'(x) \text{ wenn } q = 2^{n-1} - 1 = (N-1)/2$$

f. Das Autokorrelationsspektrum von M-Sequenzen hat nur zwei Werte

$Q_u(1) = N$ für 1=0 mod N wenn als binäres Wertepaar

$Q_u(1) = -1$ für 1=0 mod N -1/1 benutzt werden

Um das Korrelationsspektrum von Anteilen freizuhalten, die durch zusätzliche Überlagerung mit Nutzdaten entstanden sind, werden zwei M-Sequenzen als Test-Sequenzen übertragen. Diese beiden M-Sequenzen sind identisch. Die Länge der M-Sequenzen ist so gewählt, daß die maximal erwarteten Laufzeitendifferenzen der einzelnen Übertragungswege nicht länger als die einer einzelnen M-Sequenz sind. Beim überlagerten Signal gibt es dann einen Abschnitt im Datenstrom, in dem nur Signalanteile vorhanden sind, die aus der Überlagerung von M-Sequenzen entstanden sind, also keine zusätzlichen Nutzdaten enthalten. Dieser Zeitpunkt tritt ein, wenn gerade die zweite der gesendeten M-Sequenzen über den Übertragungsweg der geringsten Laufzeit, also zuerst am Empfänger eintrifft.

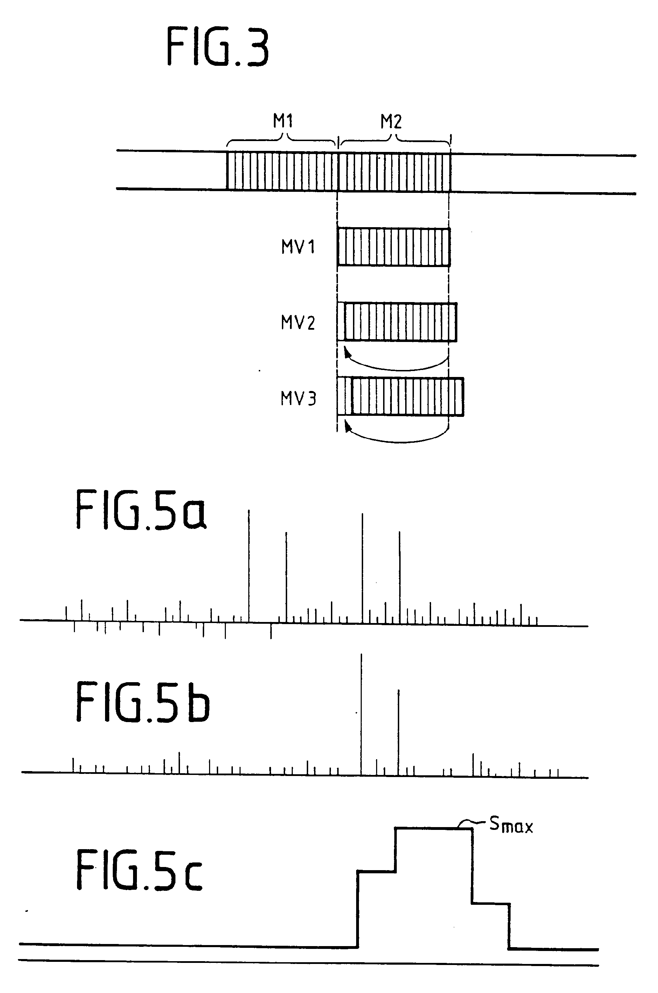

In Fig. 3 ist dieser mit M2 bezeichnete Abschnitt dargestellt. Durch die darunter gezeichnete vorgegebene M-Sequenz MV1 soll angedeutet werden, daß dieser markierte Abschnitt M2 des Datenstroms mit der vorgegebenen M-Sequenz zyklisch korreliert wird. Die zyklische Korrelation wird in mehreren Schritten durchgeführt, die nachfolgend erläutert werden. Zunächst wird jedes Byte des Abschnittes M2 mit dem darunterliegenden Bit oder Byte der M-Sequenz MV1 multipliziert. Bei dem Abschnitt ist deshalb vom Byte die Rede, da die durch Überlagerung entstandenen Additionen und Subtraktionen der Signalanteile wertemäßig genau dargestellt werden. Die in diesem ersten Schritt sich ergebenden Produkte werden addiert und das Additionsergebnis ergibt die erste Einzelkomponente des Korrelationsspektrums.

Anschließend wird nun der Abschnitt M2 gegenüber der M-Sequenz MV1 oder auch umgekehrt um ein Byte verschoben. Dabei wird allerdings das über den Abschnitt hinausverschobene Byte umgeklappt, wie es die darunter gezeichnete M-Sequenz MV2 darstellt, und wiederum mit dem ersten Byte des anderen Datenwortes im Abschnitt M2 multipliziert, so daß jeweils wieder sämtliche Bytes des Abschnittes M2 und der M-Sequenz MV2 in die Multiplikation einbezogen werden. Nach Addition der Produkte ergibt sich die zweite Einzelkomponente des Korrelationsspektrums. Diese Schritte werden über den noch dargestellten dritten Schritt mit der verschobenen M-Sequenz MV3 solange wiederholt bis alle Einzelkomponenten ermittelt worden sind.

Nachfolgend sind noch einmal zusammengefaßt die mathematischen Funktionen dargestellt, die die M-Sequenz, das Mehrwegesignal, die Korrelation und die Stoßantworten beschreiben. Dabei wird für die Stoßantworten unterschieden, ob das Wertepaar der M-Sequenz -1/+1 oder 0/+1 beträgt.

$$u = (u_o, u_1, ... u_{N-1}) \quad \text{M - Sequenz}$$
$$x_i = a_j \cdot u_{(i - j \bmod N)} \; i,j = 0..N - 1 \quad \text{Mehrwegesignal}$$
$$Q_{u,x}(1) = u_i \cdot x_{(i + 1 \bmod N)} \quad \text{Korrelation}$$
$$Q_k = Q_{u,x}(i) \quad\quad\quad i = 0...N - 1$$
$$c_j = (Q_{u,x}(j) + Q_k)/2^n \quad \text{Stoßantwort für Wertepaar - 1/1}$$
$$c_j' = (Q_{u,x}(j) + Q_k)/2^{n-2} \quad \text{Stoßantwort für Wertepaar 0/1}$$

Ein mögliches Korrelationsspektrum, das sich bei einem Überlagerungssignal mit einer M-Sequenz ergibt, ist in Fig. 4 dargestellt. Die Wertepaare, die bei der M-Sequenz benutzt wurden, sind hier -1 und +1.

In der Praxis besteht ein Problem darin, den vorerwähnten Abschnitt M2 für die zyklische Korrelation aus dem Datenstrom zu identifizieren. Zwar könnte man permanent eine zyklische Korrelation durchführen, der hierfür erforderliche Rechenaufwand wäre allerdings unvertretbar hoch. Im Prinzip ist dieser Weg möglich, denn man könnte als Kriterium für den Zeitpunkt der Korrelation mit dem Abschnitt M2 ein Korrelationsspektrum werten, bei dem ausgeprägte Einzelkomponenten vorhanden sind, während bei anderen Variationen, in denen auch Korrelationsberechnungen mit Nutzdaten durchgeführt werden, keine ausgeprägten Einzelkomponenten hervortreten.

Um die Identifikation des Abschnittes mit geringerem Rechenaufwand zu ermöglichen, wird ein Korrelationsverfahren mit insgesamt wesentlich weniger Multiplikationsschritten durchgeführt. Hierbei wird der aus M-Sequenzen und Nutzdaten gebildete überlagerte Datenstrom jeweils über die Länge einer M-Sequenz mit den gespeicherten M-Sequenzen durchlaufend korreliert, in dem ein Teil des Datenstrom der Länge einer M-Sequenz byteweise mit den gespeicherten M-Sequenzen multipliziert wird und die Multiplikationsergebnisse addiert werden. Dann wird ein um ein Byte verschobener Teil aus dem Datenstrom ausgewählt und die Multiplikations- und Additionsschritte für diesen und die folgenden Teile durchgeführt. Im Gegensatz zu der vorbeschrieben zyklischen Korrelation könnte dieser Vorgang als serielle Korrelation bezeichnet werden.

Ein mögliches Korrelationsspektrum, das sich ergibt, wenn ein Signal auf zwei Wegen zum Empfänger gelangt, ist in Fig. 5a dargestellt. Die vier herausragen Einzelkomponenten kommen dadurch zustande, daß die Korrelation bei jeder zeitlichen Deckung der im Datenstrom vorhandenen M-Sequenzen mit der im Empfänger gespeicherten M-Sequenz eine solche Stoßantwort liefert. Da die M-Sequenzen zweimal hintereinander übertragen werden und auf zwei Wegen zum Empfänger gelangen, erscheinen also vier Einzelkomponenten.

Die sich ergebenden Korrelationswerte werden nun mit den um eine M-Sequenz verzögerten, vorher in gleicher Weise ermittelten Korrelationswerten multipliziert. Die Produkte mit negativem Vorzeichen werden nicht berücksichtigt und entfallen. Das Produktspektrum zeigt Fig. 5b, wobei nunmehr zwei Einzelkomponenten auftreten. Die sich ergebenden Produkte werden anschließend über der Länge einer M-Sequenz aufaddiert.

Das Resultat dieser Addition führt zu einer treppenartigen fortlaufenden Summenfunktion, wie sie in Fig. 5c dargestellt ist. Diese Summenfunktion erreicht ihren Maximalwert, wenn reine M-Sequenzen miteinander korreliert werden. Diese Eigenschaft läßt sich für die Identifikation des Abschnittes M2 ausnutzen. Der exakte Anfang dieses Abschnittes M2 liegt nämlich von der abfallenden Flanke nach dem Maximalwert $S_{max}$ aus betrachtet um die Länge einer M-Sequenz vor dieser Flanke.

Nachdem nun dieser Abschnitt M2 im Datenstrom festgestellt worden ist, kann die eigentliche zyklische Korrelation zur Ermittlung der Kanalstoßantwort durchgeführt werden, so wie im Zusammenhang mit Fig. 3 beschrieben ist.

Bei mehrstufigen Übertragungsverfahren, z.B. 4 PSK Übertragung, kann durch Phasendrehung auf dem Übertragungswege der Fall eintreten, daß die in dem einen Kanal übertragenen M-Sequenzen beim Empfang nicht mehr in diesem sondern im anderen Kanal auftreten. Das ist bei der 4 PSK Übertragung dann der Fall, wenn eine Phasendrehung um 90° stattfindet. Bei anderen Phasenlagen kommen sowohl in dem einen Kanal als auch in dem anderen Kanal Teile der M-Sequenzen des überlagerten Datenstroms vor. Würde man für jeden Kanal gesonderte M-Sequenzen übertragen, so kann es bei der Auswertung zu Störungen kommen. Zweckmäßig erweist es sich deshalb, die M-Sequenzen senderseitig nur in einem Kanal zu übertragen aber auf der Empfängerseite beide Kanäle auszuwerten.

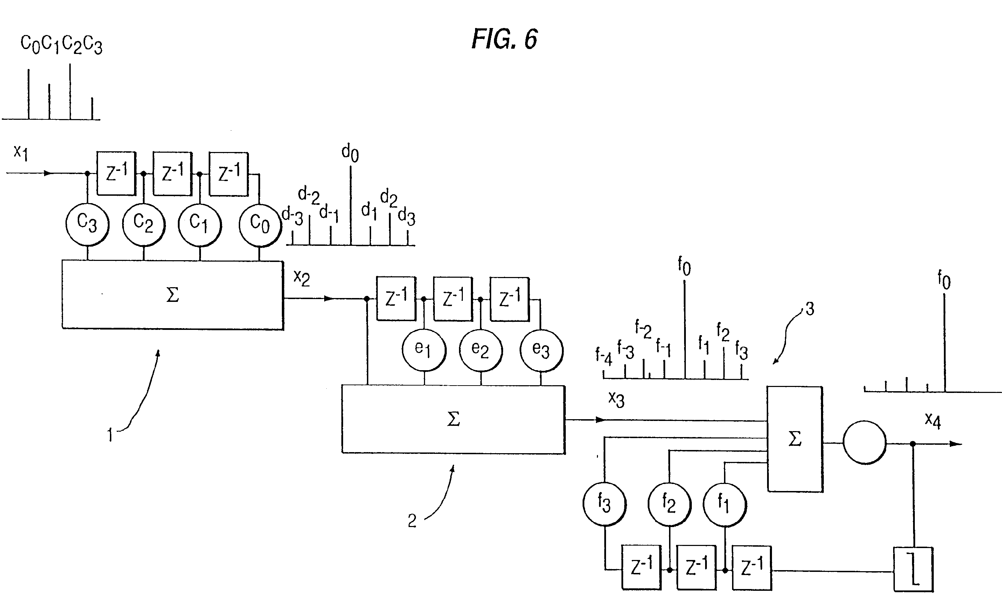

Fig. 6 zeigt eine Filteranordnung, die durch Steuerung mit den im Korrelationsspektrum ermittelten Komponenten so gesteuert werden kann, daß eine näherungsweise inverse Nachbildung der Übertragungseigenschaften des Übertragungskanals erzielt wird. Diese besteht zunächst aus einem Matched-Filter 1 der dargestellten Struktur. Es wird angenommen, daß die Stoßantwort $x_1$ des noch nicht entzerrten Übertragungskanals die am Eingang des Matched-Filters 1 angedeute Struktur besitzt. Die Filtercharakteristik wird durch Koeffizienten $C_0$, $C_1$ und $C_2$ eingestellt, die den im Korrelationsspektrum aufgefunden Einzelkomponenten entsprechen. Nach Summierung der einzelnen Wege ergibt sich ein Spektrum $x_2$, das z.B. für drei unterschiedliche Übertragungswege eine herausragende Hauptkomponente und davor und dahinterliegende, kleinere Nebenkomponenten umfaßt.

Das Spektrum $x_2$ wird nun über einen Equalizer 2 geführt, dessen Koeffizienten sich aus dem erhaltenen modifizierten Spektrum $x_2$ am Ausgang des Matched-Filters ergeben. Das am Ausgang des Equalizers liegende Spektrum $x_3$ ist dann so gefiltert, daß die vor der Hauptkomponente angeodneten Komponenten noch mehr gedämpft erscheinen, während allerdings die dahinter liegenden Komponenten weitgehend unverändert bleiben.

Dem Equalizer 2 schließt sich nun noch ein Feedback-Equalizer 3 an, dessen Struktur ebenfalls dargestellt ist. Die Koeffizienten des Feedback-Equalizers ergeben sich wieder aus den Komponenten des Spektrums $x_3$ am Ausgang des Equalizers 2. Am Ausgang des Feedback-Equalizers 3 tritt ein Spektrum $x_4$ auf, bei dem praktisch nur noch die Hauptkomponente vorhanden ist, während die nachfolgenden Teilkomponenten praktisch ausgelöscht und lediglich die davor liegenden Teilkomponenten noch gerade erkennbar sind. Der Wert dieser Hauptkomponente im Vergleich zu den benachbarten Komponenten ist jedoch so groß, daß nun eine eindeutige Unterscheidung getroffen und nun die übertragenen Nutzdaten sicher ausgewertet werden können.

## Patentansprüche

1.  Verfahren zur Signalentzerrung in einem Empfänger für über einen Übertragungskanal übertragene digitale codierte Signale bei Mehrwegempfang, wobei vor der Übertragung von Nutzdaten Test-Sequenzen vereinbarter Struktur übertragen werden, die empfangenen Test-Sequenzen mit einer im Empfänger gespeicherten Test-Sequenz der vereinbarten Struktur korreliert werden und die als Korrelationsergebnis in Form eines Korrelationsspektrums erhaltene Kanalstoßantwort zur Steuerung der Filterkoeffizienten einer die Übertragungsfunktion des Übertragungskanals in der es nachbildenden Filteranordnung verwendet wird, **dadurch gekennzeichnet,** daß als Test-Sequenzen jeweils zwei identische M-Sequenzen unmittelbar nacheinander übertragen werden, daß eine zyklische Korrelation der gespeicherten M-Sequenz mit einem Abschnitt des aus Nutzdaten und M-Sequenzen zusammengesetzten und bei Mehrwegeempfang zeitversetzt überlagerten Datenstroms durchgeführt wird, wobei der Abschnitt durch die am Empfänger jeweils zuerst eintreffende zweite M-Sequenz vorgegeben ist, indem die gespeicherte M-Sequenz mit dem Abschnitt des Datenstroms byteweise multipliziert wird, die Multiplikationsergebnisse addiert werden, daß nach Verschiebung des Abschnittes gegenüber der gespeicherten M-Sequenz um ein Bit die Multiplikations- und Additionsschritte solange wiederholt werden, bis jedes Bit des Abschnittes mit jedem Bit der gespeicherten M-Sequenz einmal multipliziert worden ist und sich aus den erhaltenen Additionsergebnissen eine Summenfolge der gleichen Länge wie die M-Sequenz als Korrelationsspektrum ergibt.

2.  Verfahren nach Anspruch 1, **dadurch gekennzeichnet,** daß zur Ermittlung des Abschnittes fortlaufend der aus M-Sequenzen und Nutzdaten gebildete Datenstrom jeweils über die Länge einer M-Sequenz mit der gespeicherten M-Sequenz durchlaufend korreliert wird, indem ein Teil des Datenstroms der Länge einer M-Sequenz byteweise mit der gespeicherten M-Sequenz multipliziert wird, die Multiplikationsergebnisse addiert werden, ein um ein Byte verschobener Teil aus dem Datenstrom ausgewählt wird und die Multiplikations- und Additionsschritte für diesen und die folgenden Teile durchgeführt werden, daß die Korrelationswerte mit den um eine M-Sequenz verzögerten Korrelationswerten multipliziert werden und die sich ergebenden Produkte über der Länge einer M-Sequenz aufaddiert werden und daß von der so entstandenen fortlaufenden Summenfunktion der Maximalwert ausgewertet wird und der vor der abfallenden Flanke nach dem Maximalwert der Summenfunktion liegende Abschnitt des Datenstroms mit einer Länge gleich der Länge einer M-Sequenz als Abschnitt für die zyklische Korrelation ausgewählt wird.

3.  Verfahren nach einem oder mehreren der Ansprüche 1 oder 2, **dadurch gekennzeichnet,** daß die Periodendauer der Test-Sequenzen so gewählt ist, daß sie größer als die größte Laufzeitdifferenz des Übertragungskanals ist.

4.  Verfahren nach einem oder mehreren der Ansprüche 1 bis 3, **dadurch gekennzeichnet,** daß bei mehrstufigen Übertragungsverfahren, wie z.B. 4 PSK Übertragung, die Test-Sequenzen nur in einem Kanal übertragen, während im anderen Kanal im gleichen Zeitabschnitt nur gleiche Werte, z.B. Nullen oder Einsen, übertragen werden, während die Korrelation in beiden Kanälen durchgeführt wird.

5.  Verfahren nach Anspruch 4, **dadurch gekennzeichnet,** daß die Summenfunktionen durch kombinierte Auswertung der zeitlich übereinstimmenden Korrelationswerte aus beiden Kanälen gebildet werden.

## Claims

1. A method of eliminating distortion from signals in a receiver for digital coded signals transmitted along a transmission channel with multipath reception, wherein prior to the transmission of user data test sequences of agreed structure are transmitted, the test sequences received are correlated with a test sequence of the agreed structure stored in the receiver, and the unit pulse response of the channel, received as the result of correlation in the form of a correlation spectrum, is used to control the filter coefficients of a filter arrangement which inversely simulates the transmission function of the transmission channel, characterised in that two identical M sequences are in each case transmitted in immediate succession as test sequences, that the M sequence stored is cyclically correlated with a section of the overlaid data stream made up of user data and M sequences and offset in time in the case of multipath reception, the section being specified by the second M sequence which is in each case the first to reach the receiver, through the M sequence stored being multiplied byte by byte by the section of the data stream and the results of the multiplication added, and that when the section has been shifted one bit relative to the M sequence stored the multiplication and addition steps are repeated until each bit in the section has been multiplied once by each bit in the M sequence stored and a totalled sequence of the same length as the M sequence is arrived at as the correlation spectrum from the results obtained from the addition.

2. A method according to Claim 1, characterised in that to determine the section the data stream made up of M sequences and user data is consecutively correlated continuously with the M sequence stored over the length of an M sequence in each case, through multiplying part of the data stream of the length of an M sequence byte by byte by the M sequence stored and adding the results of the multiplication, a part shifted one byte is selected from the data stream and the multiplication and addition steps are carried out for that and the following parts, that the correlation values are multiplied by the correlation values delayed by one M sequence and the resultant products are added up over the length of one M sequence, and that the maximum value of the resultant consecutive totalled function is assessed and the section of the data stream located in front of the negative edge after the maximum value of the totalled function, of a length equal to the length of an M sequence, is selected as a section for cyclic correlation.

3. A method according to Claim 1 or 2, characterised in that the period of the test sequences is selected so that it is greater than the maximum transit time difference in the transmission channel.

4. A method according to any of Claims 1 to 3, characterised in that in multistage transmission procedures such as quaternary PSK transmission the test sequences are transmitted in one channel only, while equal values only, e.g. zeros or ones, are transmitted in the other channel during the same period of time, and while correlation is carried out in both channels.

5. A method according to Claim 4, characterised in that the totalled functions are formed by combined assessment of the correlation values from both channels at the same time.

## Revendications

1. Procédé de régénération de signaux dans un récepteur de signaux codés numériquement et transmis par un canal de transmission en réception multivoies, dans lequel des séquences de test de structure convenue sont transmises avant la transmission de données utiles, ces séquences de test étant après la réception corrélées avec une séquence de test de structure convenue, mémorisée dans le récepteur et dans lequel la réponse impulsionnelle du canal est utilisée, comme résultat de corrélation obtenu sous la forme d'un spectre de corrélation, pour la programmation des coefficients de filtres d'un dispositif de filtres simulant la fonction de transmission du canal de transmission, **caractérisé en ce qu'**on émet directement l'une à la suite de l'autre **qu'**on effectue une corrélation cyclique de la séquence-mémorisée avec une section de la chaîne de données, cette chaîne de données se composant de données utiles et de séquences-M et étant superposée de manière décalée dans le temps lors de la réception multivoies, cette section n'étant indiquée que par la deuxième séquence-M arrivant au récepteur, la séquence-M mémorisée étant alors multipliée octet par octet avec la section de la chaîne de données et les produits de la multiplication étant additionnés, et **en ce qu'**après le décalage de la section d'un bit par rapport à la séquence-M mémorisée les étapes de multiplication et d'addition sont répétées, jusqu'à ce que chaque bit de la section ait été multiplié une fois par chaque bit de la séquence-M mémorisée et qu'on obtienne à partir des résultats des additions, comme spectre de corrélation, une suite de sommes de même longueur que la séquence-M.

2. Procédé d'après la revendication 1, **caractérisé en ce qu'**afin de déterminer la section, la chaîne de données composée de données utiles et de séquences-M est corrélée de manière continue sur toute la longueur d'une séquence-M avec la séquence-M mémorisée, une partie de la chaîne de données de la longueur d'une séquence-M étant alors multipliée octet par octet avec la séquence-M mémorisée, les produits de la multiplication étant additionnés, une partie décalée d'un octet de la chaîne de données étant sélectionnée et les étapes de multiplication et d'addition pétant effectuées pour cette partie et les parties suivantes, **en ce que** les valeurs de corrélation sont multipliées par les valeurs de obtenus étant additionnés sur la longueur d'une séquence-M et **en ce qu'**on évalue la valeur maximale au moyen de la fonction de sommes continue ainsi obtenue et **que** la section de la chaîne de données placée avant le flanc d'impulsions déclinant après la valeur maximale de la fonction de sommes, ayant une longueur égale à la longueur dùne séquence-M est sélectionnée comme section pour la corrélation cyclique.

3. Procédé selon l'une ou plusieurs des revendications 1 ou 2 **caractérisé en ce que** la durée de période des séquences de test est choisie de manière à ce qu'elle soit supérieure à la différence de temps de parcours du canal de transmission la plus élevée.

4. Procédé selon l'une ou plusieurs des revendications 1 à 3 **caractérisé en ce que** lors d'une transmission à plusieurs étapes, comme par exemple une transmission MDP 4, les séquences de test sont émises dans un canal seulement,alors que, dans le même laps de temps, on envoie seulement des valeurs semblables, par exemple des zéros et des uns, dans l'autre canal, la corrélation étant effectuée dans les deux canaux.

5. Procédé selon la revendication 4 **caractérisé en ce que** les fonctions de sommes sont obtenues au moyen d'une évaluation combinée des valeurs de corrélation des deux canaux, concordant dans le temps.

# FIG.1

US

Sendeweg / Mehrwegeempfang

$\alpha \cdot$ US

Empfängerstruktur

# FIG.4

$Q_{U,X}$

$29.5 \triangleq 1$

$21.5 \triangleq \frac{3}{4}$

$13.5 \triangleq \frac{1}{2}$

$5.5 \triangleq \frac{1}{4}$

$-2.5 \triangleq 0$

$30 \triangleq 0$

M-Sequenz: $u_i$     $i = 0 \dots 30$

Überlagerung:
$x_i = u_i + .5 \cdot u_{i-7} + .25 \cdot u_{i-15} + .75 \cdot u_{i-28}$

zyklische Korrelation $Q_{U,X}$

# FIG.2

| Test sequ. | 4×127 bit | Nutzdaten |
|---|---|---|
| | | 2×1270 bit |

2·31µs

| Ch 1 | Ch 2 | Ch 3 | Ch 4 | Ch 5 | Ch 6 | Ch 7 | Ch 8 | Ch 9 | Ch 10 | Ch 11 | Ch 12 | Ch 13 | Ch 14 | Ch 15 | Ch 16 |
|---|---|---|---|---|---|---|---|---|---|---|---|---|---|---|---|

≈370µs

≈6 ms

EP 0 475 984 B1

# FIG.3

M1    M2

MV 1

MV 2

MV 3

# FIG.5a

# FIG.5b

# FIG.5c

Smax

## FIG. 6